# EUROPÄISCHE PATENTANMELDUNG

(11) **EP 1 752 722 A2**
(43) Veröffentlichungstag der Anmeldung: **14.02.2007**
(21) Anmeldenummer: 06016852.3
(22) Anmeldetag: 11.08.2006
(51) Int. Cl.: F25D 23/00

(54) **Kühl- und/oder Gefriergerät**

(30) Priorität: 12.08.2005 DE 202005012782 U
(71) Anmelder: Liebherr-Hausgeräte Ochsenhausen GmbH, 88416 Ochsenhausen (DE)
(72) Erfinder: Döbler, Roland, 88471 Laupheim (DE); Kienle, Raimund, 88430 Ellwangen (DE)
(74) Vertreter: Herrmann, Uwe

(57) **Zusammenfassung**

Die vorliegende Erfindung betrifft ein Kühl- und/oder Gefriergerät (200) mit wenigstens einem Stellfuß, dessen Position relativ zu dem Korpus des Gerätes zum Zwecke der Höhen- bzw. Neigungsverstellung veränderbar ist, wobei der Steilfuß als Schraube (20) ausgeführt ist, die eine von oben zugängliche Aufnahme für ein Werkzeug aufweist, mittels dessen die Schraube verdrehbar ist.

## Beschreibung

Die Erfindung betrifft ein Kühl- und/oder Gefriergerät mit wenigstens einem Stellfuß, dessen Position relativ zu dem Korpus des Gerätes zum Zwecke der Höhen- bzw. Neigungsverstellung des Gerätes veränderbar ist.

Bei heute bekannten Einbaugeräten, insbesondere bei Festtürgeräten wird die Neigungsverstellung mittels Standfüßen realisiert. Bei der Festtürtechnik wird die Küchenmöbeltür direkt auf die Gerätetür fest montiert. Dies erfolgt scharnierseitig mittels Schrauben durch das Scharnier in das Möbel. Auf der Griffseite ist ein Winkel (Spritzteil mit Filmscharnier) mit Langlöchern geräteseitig vorgesehen. Die Befestigung des Gerätes selbst erfolgt durch Schrauben in das Gerät sowie in den Möbelboden. Die Standfüße verfügen über ein Außengewinde, das in einem Verstärkungswinkel mit Innengewinde aufgenommen ist. Soll die Position des Stellfußes relativ zu dem Korpus des Gerätes verändert werden, das heißt soll der Stellfuß ein- oder ausgeschraubt werden, wird ein Gabelschlüssel auf einem am Standfuß befestigten Sechskant aufgesetzt und durch Drehen des Gabelschlüssels die gewünschte Neigungs- bzw. Höhenverstellung vorgenommen. Eine derartige Vorgehensweise ist verhältnismäßig umständlich.

Der vorliegenden Erfindung liegt die Aufgabe zugrunde, ein Kühl- und/oder Gefriergerät der eingangs genannten Art dahingehend weiterzubilden, dass die Verstellbarkeit des Stellfußes vereinfacht wird.

Diese Aufgabe wird durch ein Kühl- und/oder Gefriergerät mit den Merkmalen des Anspruchs 1 gelöst. Danach ist vorgesehen, dass der Stellfuß als Schraube ausgeführt ist, die eine von oben zugängliche Aufnahme für ein Werkzeug aufweist, mittels dessen die Schraube verdrehbar ist. Bei der Werkzeugaufnahme kann es sich beispielsweise um eine innensechskantförmige oder torxförmige Ausnehmung handeln. Grundsätzlich sind selbstverständlich auch anders gestaltete Werkzeugaufnahmen möglich. Die vorliegende Erfindung weist den Vorteil auf, dass eine Verstellung des Stellfußes und somit eine Höhen- bzw. Neigungsjustage einfach von oben durchführbar ist. Ein vergleichsweise lästiges Erfassen eines Sechskants des Fußes mittels Gabelschlüssel, der wegen der reduzierten Platzverhältnisse unter Umständen umgedreht werden muss, wie dies bei aus dem Stand der Technik bekannten Geräten erforderlich ist, entfällt.

Besonders vorteilhaft ist es, wenn die Schraube als Hohlschraube ausgeführt ist. Der Hohlraum der Hohlschraube dient zur Aufnahme einer Befestigungsschraube, die durch die Hohlschraube in den Möbelboden eingeschraubt wird. Die erfindungsgemäße Schraube dient somit nicht nur zur Höhen- bzw. Neigungsjustage des Gerätes, sondern auch zur Aufnahme einer Befestigungsschraube, mittels derer das Gerät an dem Möbelboden festgeschraubt wird.

Besonders vorteilhaft ist es, wenn die Schraube in ihrem unteren Endbereich einen die Stellfläche bildenden Abschnitt und in ihrem oberen Endbereich die genannte Werkzeugaufnahme aufweist. Dabei kann der untere, die Stellfläche bildende Abschnitt einen größeren Außendurchmesser oder größere Außenabmessungen aufweisen als das Gewinde. Dieser vergrößerte Abschnitt führt zu einer verhältnismäßig großen Auflagefläche des Stellfußes und definiert die Endstellung der Schraube im eingeschraubten Zustand.

In weiterer Ausgestaltung der Erfindung ist vorgesehen, dass die Schraube mit ihrem Außengewinde mit einem Innengewinde in Eingriff steht, das sich in einem mit dem Korpus des Gerätes lösbar oder unlösbar in Verbindung stehenden Bauteil befindet. Die lösbare Verbindung zwischen diesem Bauteil und dem Korpus des Gerätes kann beispielsweise durch Schrauben realisiert sein.

Besonders vorteilhaft ist es, wenn die Schraube mit ihrem Außengewinde mit einem Innengewinde in Eingriff steht, dass sich in einem Lagerbock des Gerätes befindet. In diesem Fall weist der Lagerbock nicht nur ein Lager zur schwenkbaren Lagerung der Gerätetür auf, sondern dient auch zur Aufnahme der Schraube, durch die eine Höhen-./ Neigungsverstellung des Gerätes ermöglicht wird.

Wie oben ausgeführt ist es besonders vorteilhaft, wenn die Schraube als Hohlschraube ausgeführt ist. In diesem Fall wird zusätzlich zu der Verstellbarkeit die Möglichkeit eröffnet, die Schraube auch für die Aufnahme einer Befestigungsschraube zu nutzen. Vorzugsweise ist vorgesehen, dass die Befestigungsschraube im montierten Zustand mit ihrem Kopf auf dem oberen Endbereich der als Stellfuß dienenden Schraube aufliegt.

In weiterer Ausgestaltung der Erfindung ist vorgesehen, dass die Schraube als Hohlschraube ausgeführt ist und dass sich in dem Bauteil bzw. Lagerbock wenigstens eine weitere Bohrung zur Aufnahme von Befestigungsschrauben befindet. Diese Befestigungsschrauben dienen dazu, das Bauteil bzw. den Lagerbock an dem Gerät, beispielsweise an einer Querverbindung des Gerätes zu fixieren.

Dabei kann vorgesehen sein, dass sich die wenigstens eine weitere Bohrung senkrecht oder im wesentlichen senkrecht zu der Längsachse der Bohrung der Hohlschraube erstreckt.

Die Längsachse der als Stellfuß dienenden Schraube verläuft vorzugsweise parallel zu der Drehachse der Gerätetür.

In weiterer Ausgestaltung der Erfindung ist vorgesehen, dass die Schraube mit ihrem Außengewinde mit dem Innengewinde einer selbstschneidenden Gewindebuchse in Eingriff steht. Diese Gewindebuchse kann beispielsweise in dem oben genannten Lagerbock aufgenommen sein.

Weitere Einzelheiten und Vorteile der Erfindung werden anhand eines in der Zeichnung dargestellten Ausführungsbeispiels näher erläutert. Es zeigen:
- Figur 1:: eine Draufsicht auf einen Lagerbock eines Kühl- und/oder Gefriergerätes mit einem Stellfuß,
- Figur 2:: eine Vorderansicht des Lagerbocks gemäß Figur 1,
- Figur 3:: eine Seitenansicht von rechts des Lagerbockes gemäß Figur 1,
- Figur 4:: eine Schnittansicht des Lagerbockes gemäß Linie A-A in Figur 1,
- Figur 5:: eine Seitenansicht von rechts auf den unteren frontseitigen Bereich eines erfindungsgemäßen Kühl- und/oder Gefriergerätes mit Möbelplatte,
- Figur 6:: eine Vorderansicht der Anordnung gemäß Figur 5,
- Figur 7:: eine Schnittdarstellung gemäß Linie A-A in Figur 6,
- Figur 8:: eine teilweise Schnittdarstellung gemäß Linie B-B in Figur 6 und
- Figur 9:: eine Schnittdarstellung gemäß Linie C-C in Figur 6.

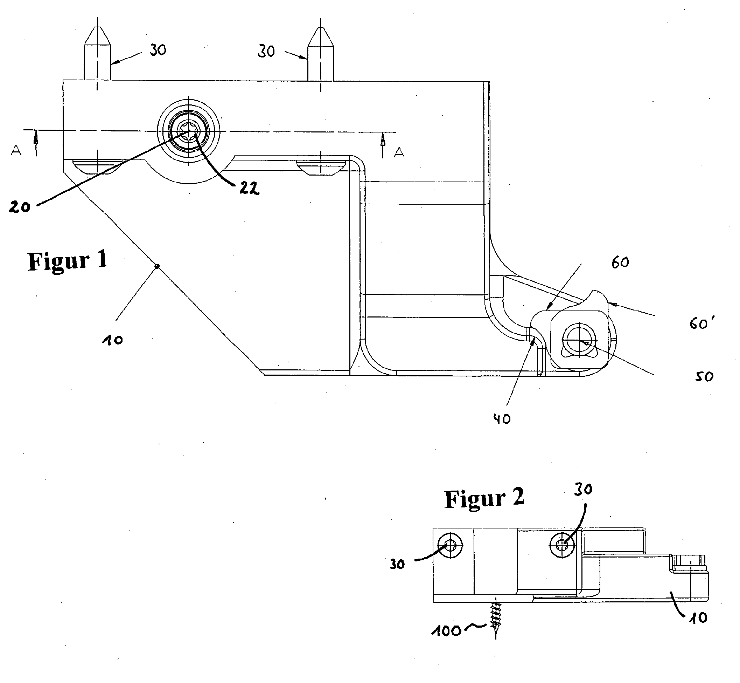

Figur 1 zeigt in einer Draufsicht den Lagerbock 10, der beispielsweise als Gußteil ausgeführt sein kann. Der Lagerbock 10 weist eine senkrecht zur Papierebene stehende Bohrung auf, in der die Schraube 20 aufgenommen ist, die auf ihrer von oben zugänglichen Seite die Werkzeugaufnahme 22 in Form einer Innensechskantaussparung aufweist. Der Lagerbock 10 gemäß Figur 1 wird von vorne an die Querverbindung eines Kühl- und/oder Gefriergerätes angeschraubt. Hierzu dienen die beiden Befestigungsschrauben 30 gemäß Figur 1. Der Lagerbock 10 weist zwei Bohrungen zur Aufnahme der Schrauben 30 auf. Diese Bohrungen stehen senkrecht auf der Bohrung zur Aufnahme der Schraube 20, die den Stellfuß bildet.

In dem rechts dargestellten Endbereich weist der Lagerbock 10 einen gekrümmten Anschlag 40 auf, der den Endanschlag der Tür bildet. Mit dem Bezugszeichen 50 ist die Drehachse der Tür dargestellt. Ist die Tür geschlossen, befindet sich der Türanschlag in der Position gemäß Bezugszeichen 60'. Wird die Tür gegen den Uhrzeigersinn in die Offenposition verschwenkt, kommt es zu einem Anliegen des Türanschlages an den Anschlag 40 wie dies durch das Bezugszeichen 60 dargestellt ist.

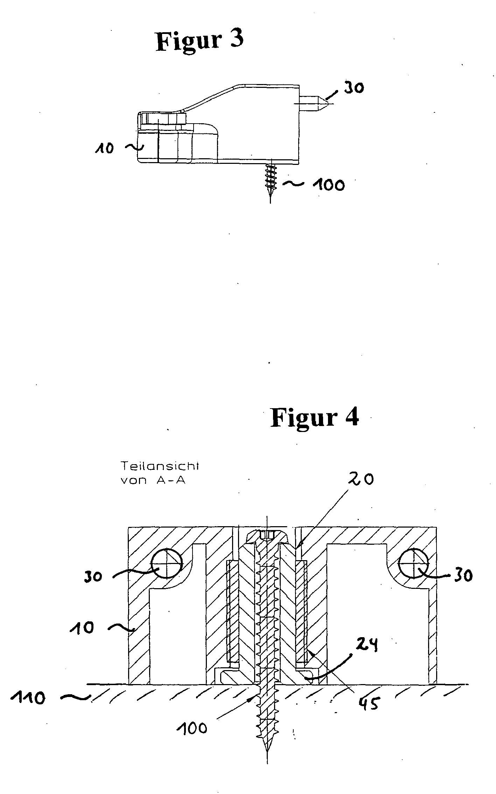

Figur 2 zeigt den Lagerbock gemäß Figur 1 in einer Vorderansicht. In dieser sind die beiden Schrauben 30 erkennbar, mittels derer der Lagerbock 10 frontseitig in die Querverbindung oder an ein sonstiges geeignetes Bauteil des Kühl- bzw. Gefriergerätes geschraubt wird. In dem rechts dargestellten Endbereich des Lagerbockes 10 befindet sich die Lagerung für die Gerätetür. Das Bezugszeichen 100 kennzeichnet die durch die Hohlschraube 20 geführte Befestigungsschraube, mittels derer das Gerät an einem Möbelboden befestigt werden kann. Figur 3 zeigt den Lagerbock 10 in einer Seitenansicht von rechts.

Figur 4 zeigt die Schnittansicht gemäß Linie A-A in Figur 1. Aus Figur 4 wird deutlich, dass die Befestigungsschraube 100 in dem sich in axialer Richtung erstrekkenden Hohlraum der als Stellfuß dienenden Hohlschraube 20 aufgenommen ist. Sie liegt mit ihrem Kopf auf dem Endbereich der Stellschraube 20 auf, in dem sich die Werkzeugaufnahme 22 befindet. Die Hohlschraube 20 weist einen zylindrischen Abschnitt mit Außengewinde sowie einen gegenüber diesem Abschnitt vergrößerten unteren Abschnitt 24 auf, der einerseits den Anschlag der Hohlschraube am Lagerbock 10 bildet und dessen Unterseite andererseits die Auflagefläche des Stellfußes bzw. der Schraube 20 auf dem Möbelboden 110 bildet. Mit dem Bezugszeichen 45 ist eine selbstschneidende Gewindebuchse gekennzeichnet.

Bei der Befestigungsschraube 100 kann es sich beispielsweise um eine Spaxschraube handeln.

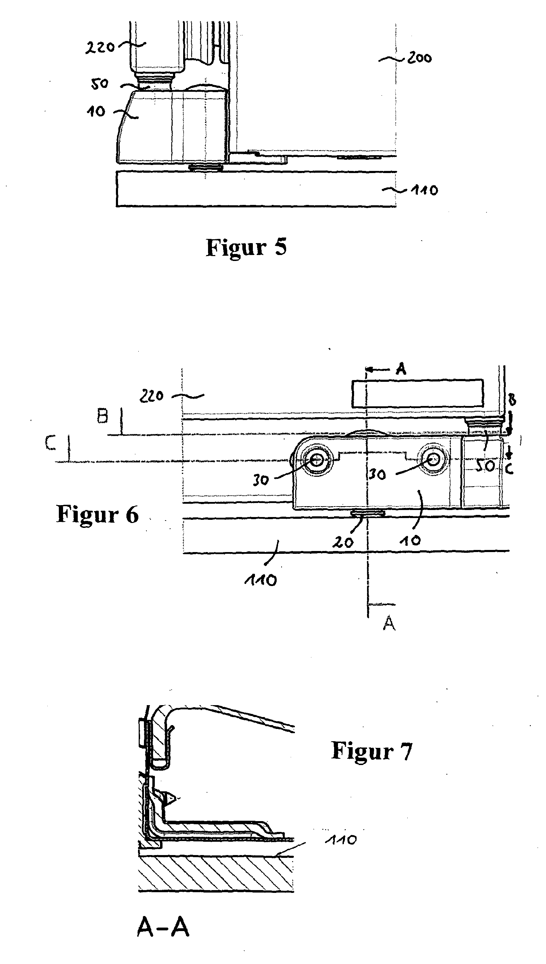

Die Figuren 5 bis 9 zeigen den Lagerbock 10 eines erfindungsgemäßen Kühl- und/oder Gefriergerätes im montierten Zustand. Figur 5 zeigt in einer Seitenansicht von rechts den Lagerbock 10 mit Drehachse 50 der Gerätetür 220. Ferner dargestellt sind die rechte Seitenwandung des Kühlgerätes 200 sowie der Möbelboden 110, auf dem das Gerät aufsteht.

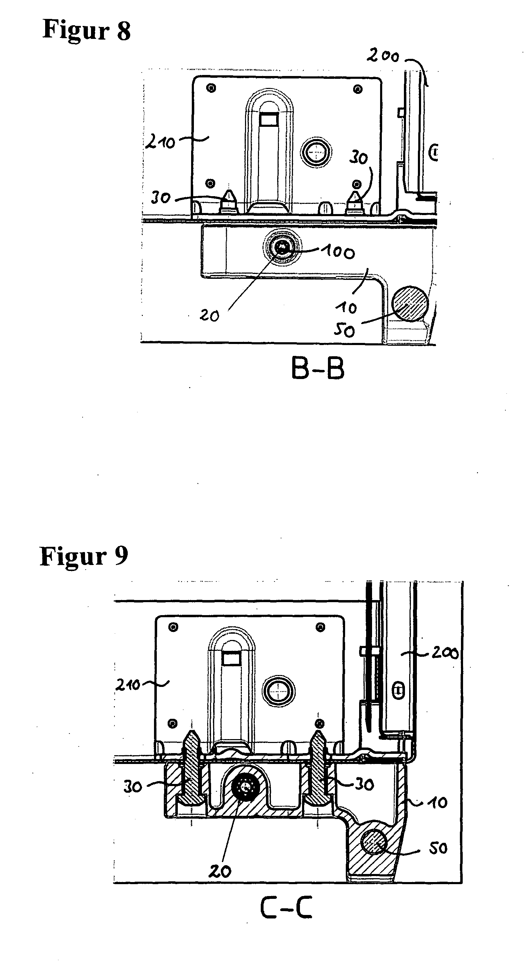

Figur 6 zeigt die Anordnung in einer Vorderansicht. Die Schnittdarstellung gemäß Linie A-A in Figur 6 ist teilweise in Figur 7 dargestellt. Die Schnittdarstellung gemäß Linie B-B in Figur 6 ergibt sich aus Figur 8 und die Schnittdarstellung gemäß Linie C-C in Figur 6 ergibt sich aus Figur 9.

Aus Figur 8 ist ersichtlich, dass der Gerätekorpus die Querverbindung bzw. den Winkel 210 aufweist, der zur Aufnahme der Befestigungsschrauben 30 dient, die sich im montierten Zustand des Lagerbockes 10 in horizontaler Richtung erstrekken. Dazu senkrecht verläuft die Hohlschraube 20. In deren sich in Längsrichtung erstreckenden Hohlraum ist die Befestigungsschraube 100 angeordnet, die nach unten über den Lagerbock 10 übersteht und deren unterer Endbereich zur Befestigung des Lagerbockes 10 in dem Möbelboden 110 dient.

Aus Figur 9 wird nochmals die Anordnung der Befestigungsschrauben 30 sowie der Hohlschraube 20 in dem Lagerbock 10 deutlich. Die Hohlschraube 20 erstreckt sich parallel zur Drehachse 50 der Tür und senkrecht zur Längsachse der Befestigungsschrauben 30. Die Hohlschraube 20 nimmt die aus den Figuren 2 bis 4 ersichtliche Schraube 100 auf, die zur Befestigung des Lagerbockes 10 am Möbelboden 110 dient, wohingegen die Schrauben 30 zur Befestigung des Lagerbockes 10 an einer Querverbindung des Korpus des Gerätes dienen.

Die aus den Figuren ersichtliche Anordnung dient der Höhenjustage sowie der Befestigung für Einbaugeräte und integrierte Geräte. Sie kann beispielsweise an allen vier Ecken des Gerätes oder nur an den zwei frontseitigen oder nur an den beiden rückwärtigen Ecken des Gerätes angeordnet sein. Grundsätzlich ist ebenfalls der Fall denkbar, dass die Anordnung nur an einer Position des Gerätes vorgesehen ist. Die aus den Figuren ersichtliche erfindungsgemäße Anordnung ist beispielsweise bei Festtürgeräten, Schlepptürgeräten sowie auch bei Dekortürgeräten einsetzbar. Die Justage wird bei geöffneter Tür mit einem geeignetem Werkzeug durchgeführt, wodurch sich der Vorteil ergibt, dass die Verstellung einfach von oben durchführbar ist. Da die Verstellung im Gewinde des Lagerbockes erfolgt, bleibt die Befestigungsschraubenlänge konstant.

## Patentansprüche

1. Kühl- und/oder Gefriergerät mit wenigstens einem Stellfuß, dessen Position relativ zu dem Korpus des Gerätes zum Zwecke der Höhen- bzw. Neigungsverstellung veränderbar ist, **dadurch gekennzeichnet, dass** der Stellfuß als Schraube ausgeführt ist, die eine von oben zugängliche Aufnahme für ein Werkzeug aufweist, mittels dessen die Schraube verdrehbar ist.

2. Kühl- und/oder Gefriergerät nach Anspruch 1, **dadurch gekennzeichnet, dass** die Schraube als Hohlschraube ausgeführt ist.

3. Kühl- und/oder Gefriergerät nach Anspruch 1 oder 2, **dadurch gekennzeichnet, dass** die Schraube in ihrem unteren Endbereich einen die Stellfläche bildenden Abschnitt und in ihrem oberen Endbereich die Werkzeugaufnahme aufweist.

4. Kühl- und/oder Gefriergerät nach einem der vorhergehenden Ansprüche, **dadurch gekennzeichnet, dass** die Schraube mit ihrem Außengewinde mit einem Innengewinde in Eingriff steht, das sich in einem mit dem Korpus des Gerätes unlösbar oder lösbar in Verbindung stehenden Bauteil befindet.

5. Kühl- und/oder Gefriergerät nach einem der vorhergehenden Ansprüche, **dadurch gekennzeichnet, dass** die Schraube mit ihrem Außengewinde mit einem Innengewinde in Eingriff steht, das sich in einem Lagerbock des Gerätes befindet.

6. Kühl- und/oder Gefriergerät nach Anspruch 4 oder 5, **dadurch gekennzeichnet, dass** die Schraube als Hohlschraube ausgeführt ist und dass sich in dem Bauteil bzw. Lagerbock wenigstens eine weitere Bohrung zur Aufnahme von Befestigungsschrauben befindet.

7. Kühl- und/oder Gefriergerät nach Anspruch 6, **dadurch gekennzeichnet, dass** sich die wenigstens eine weitere Bohrung senkrecht oder im wesentlichen senkrecht zu der Längsachse der Bohrung der Hohlschraube erstreckt.

8. Kühl- und/oder Gefriergerät nach einem der vorhergehenden Ansprüche, **dadurch gekennzeichnet, dass** die Längsachse der Schraube parallel zu der Drehachse der Gerätetür verläuft.

9. Kühl- und/oder Gefriergerät nach einem der vorhergehenden Ansprüche, **dadurch gekennzeichnet, dass** die Schraube mit ihrem Außengewinde mit dem Innengewinde einer selbstschneidenden Gewindebuchse in Eingriff steht.
